(19) Europäisches Patentamt
European Patent Office
Office européen des brevets

(11) **EP 2 584 557 A1**

(12) **EUROPEAN PATENT APPLICATION**
published in accordance with Art. 153(4) EPC

(43) Date of publication:
**24.04.2013 Bulletin 2013/17**

(51) Int Cl.:
**G09G 5/00** *(2006.01)*        **H04N 5/66** *(2006.01)*

(21) Application number: **12796501.0**

(86) International application number:
**PCT/JP2012/063912**

(22) Date of filing: **30.05.2012**

(87) International publication number:
**WO 2012/169404 (13.12.2012 Gazette 2012/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.06.2011   JP 2011128099**

(71) Applicant: **Sony Corporation
Tokyo 108-0075 (JP)**

(72) Inventor: **RANATUNGA Vijitha Sanjeewa
Tokyo 108-0075 (JP)**

(74) Representative: **Robinson, Nigel Alexander Julian
D Young & Co LLP
120 Holborn
London EC1N 2DY (GB)**

(54) **DISPLAY CONTROL DEVICE, DISPLAY CONTROL METHOD, AND PROGRAM**

(57)    The present technology relates to a display control apparatus, a display control method and a program which can suppress, for example, distortion of an image caused when an image transmitted from a data transmission channel is displayed with a little delay. A write information measurement unit measures a write preparation time required to start writing a received image in a display buffer which temporarily holds the image, a write control unit controls the writing of the image according to whether or not the write preparation time is a threshold time or more which represents a write preparation time at which the writing of the image is finished at a display end time at which the image is displayed in synchronization with a display timing at which the image needs to be displayed, and a display control unit displays the image written in the display buffer under control of the write control unit in synchronization with the display timing by a write time at which the image can be displayed in synchronization with the display timing. The present technology is applicable to, for example, a display apparatus which displays image data to be transmitted with a little delay.

*FIG. 1*

**Description**

TECHNICAL FIELD

The present disclosure relates to a display control apparatus, a display control method and a program and, more particularly, relates to a display control apparatus, a display control method and a program which can suppress, for example, distortion of an image caused when, for example, an image transmitted from a data transmission channel such as a network is displayed with a little delay.

BACKGROUND ART

In recent years, for example, telesurgeries of performing operations of patients by operating robot arms at a remote place are performed. Upon this telesurgery, a surgeon operates the robot arms looking at movies obtained by capturing images of the operation, and the movies are desirably transmitted with a little delay (in substantially real time) equal to or less than several frames (or several fields).
Hence, a coding technique of transforming several lines of each picture configuring a movie into block data and coding (compressing) each block data by wavelet transform has been proposed (see, for example, Patent Document 1).
According to this coding technique, a transmission apparatus starts coding without waiting to receive all inputs of each block data in a picture and transmits resulting coded data, and a reception apparatus starts decoding (stretching) before receiving all items of the coded data from the transmission apparatus.
Hence, the reception apparatus can decode the coded data and place the picture in a displayable state by a predetermined display timing at which the picture needs to be displayed. Consequently, the reception apparatus can display the picture on a monitor in synchronization with the display timing.

CITATION LIST

PATENT DOCUMENT

Patent Document 1: Japanese Patent Application Laid-Open No. 2007-311924

SUMMARY OF THE INVENTION

PROBLEMS TO BE SOLVED BY THE INVENTION

However, even when the above coding technique is applied, if, for example, congestion occurs in a data transmission channel such as a network, the transmission apparatus is likely to be incapable of transmitting movies with a little delay equal to or less than several frames.
In this case, the reception apparatus cannot place a picture in a displayable state by the predetermined' display timing. The picture which is not placed in a displayable state by the display timing is, for example, skipped without being displayed on the monitor, and, therefore, for example, distortion of the image to be displayed on the monitor is likely to occur.
The present disclosure has been made in light of the above circumstances, and is directed to suppress, for example, distortion of an image caused when an image transmitted from a data transmission channel is displayed with a little delay.

SOLUTION TO PROBLEMS

A display control apparatus according to an aspect of the present disclosure includes: a measurement unit which measures a write preparation time required to start writing a received image in a hold unit which temporarily holds the image; a write control unit which controls the writing of the image according to whether or not the write preparation time is a threshold time or more which represents a write preparation time at which the writing of the image is finished at a display end time at which the image is displayed in synchronization with a display timing at which the image needs to be displayed; and a display control unit which displays the image written in the hold unit under control of the write control unit in synchronization with the display timing by a write time at which the image is displayable in synchronization with the display timing.
When the write preparation time is the threshold time or more, the write control unit can start the writing of the image after the display timing passes by delaying the writing of the image started when the write preparation time passes.

A calculation unit which calculates a maximum value of a buffer capacity used to delay the writing of the image in the write control unit can be further provided.

When writing of a first image which needs to be displayed at a first display timing is started after the first display timing passes, the display control unit can display a second image which has been written in the hold unit under control of the write control unit and which is different from the first image, in synchronization with the first display timing.

When the writing of the first image is started after the first display timing passes, the display control unit can display the second image, writing of which is started after a second display timing which comes earlier than the first display timing passes, in synchronization with the first display timing.

When the write preparation time is less than the threshold time, the write control unit can start writing the image after the write preparation time passes.

When the writing of the first image which needs to be displayed at a first display timing is started after the writing preparation time passes, the display control unit can finish writing part of the first image by a write time at which the first image is displayable in synchronization with the first display timing, and, when writing of the rest of the first image is not finished, can display the part of the first image written in the hold unit, in synchronization with the first display timing.

When writing of a second image which needs to be displayed at a second display timing which comes after the first display timing is started after the second display timing passes, the display control unit displays the part of the first image and, in addition, the first image the rest of which has been written, in synchronization with the second display timing.

Another measurement unit which measures a write time required to write an image; and a threshold calculation unit which calculates the threshold time based on a distribution of the write preparation time and a distribution of the write time can be further provided, and the write control unit controls the writing of the image according to whether or not the write preparation time is the calculated threshold time or more.

A display control method according to an aspect of the present disclosure is performed by a display control apparatus which displays a received image, and the method includes: a measurement step of measuring a write preparation time required to start writing a received image in a hold unit which temporarily holds the image; a write control step of controlling the writing of the image according to whether or not the write preparation time is a threshold time or more which represents a write preparation time at which the writing of the image is finished at a display end time at which the image is displayed in synchronization with a display timing at which the image needs to be displayed; and a display control step of displaying the image written in the hold unit under control of the write control unit in synchronization with the display timing by a write time at which the image is displayable in synchronization with the display timing.

A program according to an aspect of the present disclosure causes a computer to function as: a measurement unit which measures a write preparation time required to start writing a received image in a hold unit which temporarily holds the image; a write control unit which controls the writing of the image according to whether or not the write preparation time is a threshold time or more which represents a write preparation time at which the writing of the image is finished at a display end time at which the image is displayed in synchronization with a display timing at which the image needs to be displayed; and a display control unit which displays the image written in the hold unit under control of the write control unit in synchronization with the display timing by a write time at which the image is displayable in synchronization with the display timing.

According to an aspect of the present disclosure, a write preparation time required to start writing a received image in a hold unit which temporarily holds the image is measured, the writing of the image is controlled according to whether or not the write preparation time is a threshold time or more which represents a write preparation time at which the writing of the image is finished at a display end time at which the image is displayed in synchronization with a display timing at which the image needs to be displayed, and the image written in the hold unit under control of the write control unit is displayed in synchronization with the display timing by a write time at which the image can be displayed in synchronization with the display timing.

EFFECTS OF THE INVENTION

The present disclosure can suppress, for example, distortion of an image caused when an image transmitted from a data transmission channel is displayed with a little delay.

BRIEF DESCRIPTION OF DRAWINGS

Fig. 1 is a block diagram illustrating a configuration example of a transmission/reception system according to the present disclosure.
Fig. 2 is a view illustrating an example where an image is displayed in synchronization with a display timing.
Fig. 3 is a view illustrating an example of a measurement method of measuring write information of a field image.

Fig. 4 is a view illustrating an example of a distribution of write preparation times.

Fig. 5 is a view illustrating an example of a distribution of buffer write times.

Fig. 6 is a first view illustrating an example of a calculation method of calculating a threshold to be compared with the write preparation time and a delay buffer maximum time.

Fig. 7 is a second view illustrating an example of the calculation method of calculating the threshold to be compared with the write preparation time and the delay buffer maximum time.

Fig. 8 is a view illustrating an example where start of writing is delayed.

Fig. 9 is a view illustrating an example of a delay buffer maximum time.

Fig. 10 is a view illustrating an example where a field image written by delaying start of writing is displayed.

Fig. 11 is a view illustrating an example where writing is started after a write preparation time passes.

Fig. 12 is a view illustrating an example where a write time comes at or after a display time when writing is started after a write preparation time passes.

Fig. 13 is a view illustrating an example where whether or not a write time comes at or after a display time is monitored when writing is started after a write preparation time passes.

Fig. 14 is a first view illustrating an example where a transmission time changes.

Fig. 15 is a second view illustrating an example where a transmission time changes.

Fig. 16 is a flowchart for explaining display control processing.

Fig. 17 is a flowchart for explaining threshold calculation processing.

Fig. 18 is a view illustrating an example of a measurement method of measuring write information of a progressive image.

Fig. 19 is a block diagram illustrating a configuration example of a computer.

MODE FOR CARRYING OUT THE INVENTION

Hereinafter, an embodiment according to the present disclosure (referred to as "the present embodiment" below) will be described. In addition, the present embodiment will be described in the following order.

1. Present Embodiment (an example where, for example, distortion of an image is suppressed by adjusting a write timing of an image in a display buffer)

2. Modified Example

<1. Present Embodiment>

[Configuration Example of Transmission/Reception System]

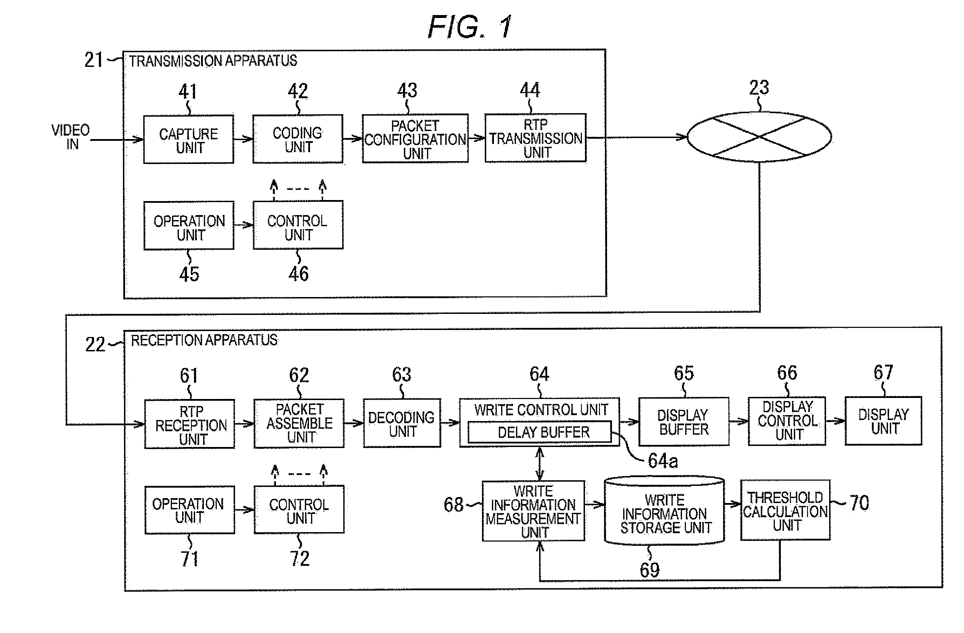

Fig. 1 illustrates an example of a transmission/reception system according to the present disclosure.

This transmission/reception system includes a transmission apparatus 21, a reception apparatus 22 and a network 23 such as Internet.

In addition, for example, in this transmission/reception system, the reception apparatus 22 adjusts a timing to write an image in a display buffer 65 which will be described below to display the image with a little delay without causing, for example, distortion of the image transmitted from the transmission apparatus 21.

[Configuration Example of Transmission Apparatus 21]

The transmission apparatus 21 includes a capture unit 41, a coding unit 42, a packet configuration unit 43, an RTP (real-time transport protocol) transmission unit 44, an operation unit 45 and a control unit 46.

The capture unit 41 acquires (captures) image data (corresponding to video IN) input from an outside, and supplies the image data to the coding unit 42.

The coding unit 42 performs coding processing of coding the image data from the capture unit 41, and supplies the coded data resulting from the coding processing, to the packet configuration unit 43.

In addition, for the coding processing, it is possible to adopt wavelet coding processing of coding image data using, for example, wavelet transform and compressing the image data.

The packet configuration unit 43 packetizes (transforms) the coded data from the coding unit 42 to a plurality of RTP packets, and outputs the RTP packets to the RTP transmission unit 44. In addition, the RTP packet refers to a packet in a format supporting RTP disclosed in IETF RFC3550.

The RTP transmission unit 44 adds, for example, transmission times at which the RTP packets are transmitted to the reception apparatus 22, to the RTP packets from the packet configuration unit 43 as time stamps according to RTP. Further, the RTP transmission unit 44 transmits the RTP packets to which the time stamps are added, to the reception apparatus 22 through the network 23.

The operation unit 45 is, for example, an operation button operated by a user, and supplies an operation signal matching a user operation to the control unit 46.

The control unit 46 controls each of the capture unit 41, the coding unit 42, the packet configuration unit 43 and the RTP transmission unit 44 based on, for example, an operation signal from the operation unit 45.

[Configuration Example of Reception Apparatus 22]

The reception apparatus 22 includes an RTP reception unit 61, a packet assemble unit 62, a decoding unit 63, a write control unit 64 with a built-in delay buffer 64a, a display buffer 65, a display control unit 66, a display unit 67, a write information measurement unit 68, a write information storage unit 69, a threshold calculation unit 70, an operation unit 71 and a control unit 72.

The RTP reception unit 61 receives the RTP packets transmitted from the RTP transmission unit 44 through the network 23, and supplies the RTP packets to the packet assemble unit 62.

The packet assemble unit 62 generates decoding target coded data by assembling the RTP packets from the RTP reception unit 61, and supplies the coded data to the decoding unit 63.

The decoding unit 63 applies decoding processing supporting the coding processing performed in the coding unit 42, to the coded data from the packet assemble unit 62, and supplies the resulting image data to the write control unit 64. Meanwhile, for decoding processing, decoding processing of decoding and stretching data by, for example, inverse transform of wavelet transform is adopted.

The write control unit 64 supplies the image data from the decoding unit 63 to the display buffer 65 to store (write in). That is, the write control unit 64 controls writing of image data in the display buffer 65 according to information from the write information measurement unit 68. Further, the write control unit 64 supplies a write start time Ts at which writing in the display buffer 65 is started and a write end time Te at which writing is finished, to the write information measurement unit 68 per image data.

The display buffer 65 temporarily holds the image data from the write control unit 64.

The display control unit 66 reads the image data from the display buffer 65. Further, the display control unit 66 causes the display unit 67 to display the image data read from the display buffer 65 in synchronization with a predetermined display timing Vblank.

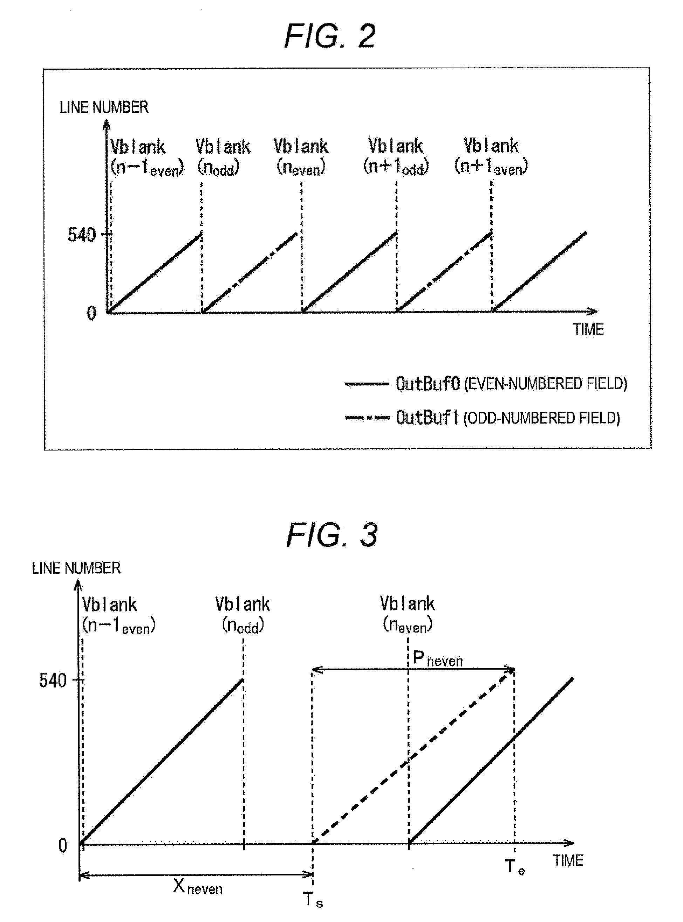

Next, Fig. 2 illustrates an example where the display control unit 66 causes each image to be displayed at the predetermined display timing Vblank.

In addition, image data n is image data which is captured n-th by the capture unit 41 of the transmission apparatus 21. The image data n is configured by an odd-numbered field image $n_{odd}$ configured by odd-numbered lines of each line configuring the image data n, and an even-numbered field image $n_{even}$ configured by the even-numbered lines of each line configuring the image data n.

Further, in Fig. 2, a horizontal axis indicates the time, and a vertical axis indicates a line number of a line to be displayed at a corresponding time. Meanwhile, the image data n is configured by, for example, 1080 lines, and the odd-numbered field image $n_{odd}$ and the even-numbered field image $n_{even}$ are each configured by 540 lines.

The display timing Vblank ($n_{odd}$) indicates the time at which display of the odd-numbered field image $n_{odd}$ is started. Further, the display timing Vblank ($n_{even}$) indicates the time at which display of the even-numbered field image $n_{even}$ is started.

The display control unit 66 reads the odd-numbered field image $n_{odd}$ from the display buffer 65 in synchronization with the display timing Vblank ($n_{odd}$), and causes the display unit 67 to display the odd-numbered field image $n_{odd}$. Further, the display control unit 66 reads the even-numbered field image $n_{even}$ from the display buffer 65 in synchronization with the display timing Vblank ($n_{even}$), and causes the display unit 67 to display the even-numbered field image $n_{even}$.

The display unit 67 displays each image data n according to, for example, an interlace system. That is, for example, the display unit 67 alternately displays the odd-numbered field image $n_{odd}$ and the even-numbered field image $n_{even}$ under control of the display control unit 66. In addition, the display unit 67 may be a component of the reception apparatus 22 as illustrated in Fig. 1, or may be independently provided without being included as the component of the reception apparatus 22. In this case, the display control unit 66 in the reception apparatus 22 and the display unit 67 provided outside the reception apparatus 22 are connected through, for example, a cable.

The write information measurement unit 68 measures write information of the even-numbered field image $n_{even}$ written in the display buffer 65. In addition, the write information measurement unit 68 may measure write information of the odd-numbered field image $n_{odd}$ written in the display buffer 65 instead of the write information of the even-numbered field image $n_{even}$ or together with the write information of the even-numbered field image $n_{even}$.

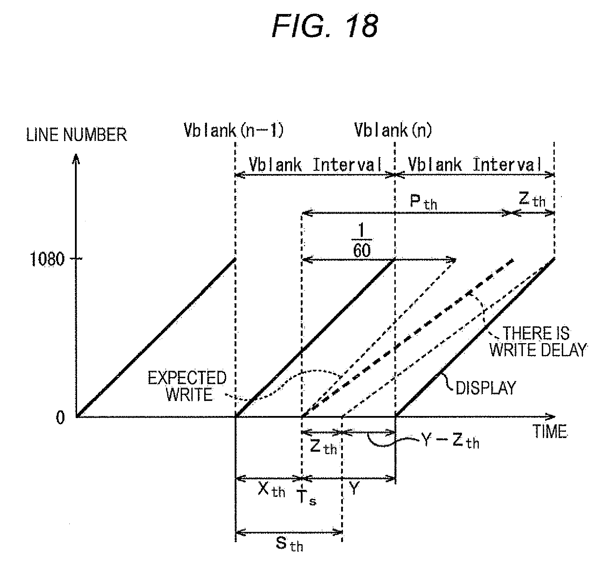

Further, when, for example, the display unit 67 displays each image data n according to the progressive system, the write information measurement unit 68 regards each image data n as a progressive image and measures write information of this progressive image. This will be described below with reference to Fig. 18.

Hereinafter, the write information measurement unit 68 measures write information of each field image (the odd-numbered field image $n_{odd}$ and the even-numbered field image $n_{even}$) written in the display buffer 65.

As write information of the even-numbered field image $n_{even}$ written in the display buffer 65, the write information measurement unit 68 measures, for example, a write preparation time $Xn_{even}$ required by a time at which writing of the even-numbered field image $n_{even}$ is started and a buffer write time $Pn_{even}$ required to write the even-numbered field image $n_{even}$.

Next, Fig. 3 illustrates an example where the write information measurement unit 68 measures the write preparation time $Xn_{even}$ and the buffer write time $Pn_{even}$ of the even-numbered field image $n_{even}$.

Meanwhile, in Fig. 3, the write start time Ts indicates a time at which writing of the even-numbered field image $n_{even}$ in the display buffer 65 is started. Further, the write end time Te indicates a time at which writing of the even-numbered field image $n_{even}$ in the display buffer 65 is finished.

In addition, the write information measurement unit 68 receives a supply of the write start time Ts and the write end time Te of the even-numbered field image $n_{even}$ from the write control unit 64.

As illustrated in Fig. 3, the write information measurement unit 68 measures the write preparation time $Xn_{even}$ (= Vblank ($n-1_{even}$) - Ts) based on the write start time Ts from the write control unit 64 and the predetermined display timing Vblank ($n-1_{even}$).

Further, as illustrated in Fig. 3, for example, the write information measurement unit 68 measures the buffer write time $Pn_{even}$ (= Te - Ts) based on the write start time Ts and the write end time Te from the write control unit 64.

The write information measurement unit 68 also measures a write preparation time $Xn_{odd}$ and a buffer write time $Pn_{odd}$ of the odd-numbered field image $n_{odd}$ in the same manner for the odd-numbered field image $n_{odd}$.

The write information measurement unit 68 supplies the write preparation time $Xn_{even}$ and the buffer write time $Pn_{even}$ measured per even-numbered field image $n_{even}$, and the write preparation time $Xn_{odd}$ and the buffer write time $Pn_{odd}$ measured per odd-numbered field image $n_{odd}$ to the write information storage unit 69 to store.

Hereinafter, when an even-numbered field image $n_{even}$ and an even-numbered field image $n_{even}$ do not need to be distinguished, the even-numbered field image is simply referred to as a "field image m".

In addition, m indicates the field image m is displayed m-th. That is, the even-numbered field image $n_{even}$ is an image which is displayed 2n-th, and the odd-field image $n_{odd}$ is an image which is displayed 2n-1-th. When 2n = m is true, the even-numbered field image $n_{even}$ is an image which is displayed m-th, and the odd-numbered field image $n_{odd}$ is an image which is displayed m-1-th.

Hence, when m is even, the field image m is an even-numbered field image which is displayed m-th, and, when m is odd, the field image m is an odd-numbered field image which is displayed m-th.

Further, the write preparation time $Xn_{odd}$ or $Xn_{even}$ of the field image m will be referred to as a "write preparation time Xm", and the buffer write time $Pn_{odd}$ or $Pn_{even}$ of the field image m will be referred to as the buffer write time Pm.

The write information storage unit 69 stores the write preparation time Xm and the buffer write time Pm from the write information measurement unit 68 as write information.

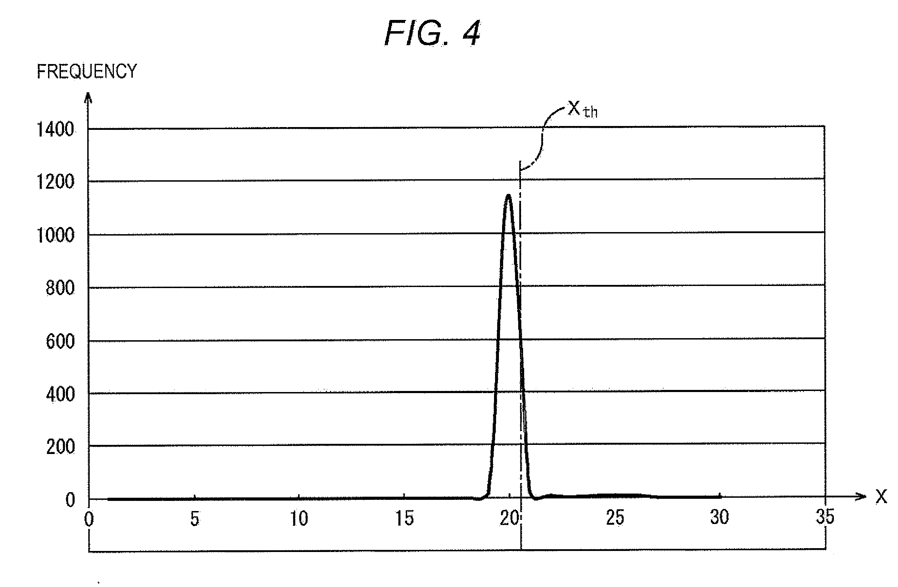

The threshold calculation unit 70 performs threshold calculation processing of calculating a threshold time Sth and a delay buffer maximum time (Y-Zth) which will be described below, based on the write information stored in the write information storage unit 69. In addition, this threshold calculation processing will be described in detail with reference to Figs. 4 to 7.

The threshold calculation unit 70 supplies the threshold time Sth and the delay buffer maximum time (Y-Zth) calculated by threshold calculation processing, to the write information measurement unit 68.

The operation unit 71 is, for example, an operation button operated by a user, and supplies an operation signal matching a user operation to the control unit 72.

The control unit 72 controls each of the RTP reception unit 61, the packet assemble unit 62, the decoding unit 63, the write control unit 64, the display control unit 66, the write information measurement unit 68 and the threshold calculation unit 70 based on, for example, an operation signal from the operation unit 71.

[Details of Threshold Calculation Processing]

Next, the threshold calculation processing performed by the threshold calculation unit 70 will be described with reference to Figs. 4 to 7.

Fig. 4 illustrates an example of a distribution of the write preparation times Xm stored in the write information storage unit 69.

In Fig. 4, a horizontal axis indicates the write preparation time Xm, and a vertical axis indicates the frequency of the write preparation time Xm.

The threshold calculation unit 70 generates X distribution information indicating the distribution of the write preparation times Xm as illustrated in Fig. 4 based on the write preparation time Xm stored in the write information storage unit 69.

Further, the threshold calculation unit 70 calculates a threshold Xth for distinguishing between the write preparation times Xm of top $\alpha$ (for example, $\alpha$ = 95) percent in case that the write preparation times Xm are arranged in an ascending order and the write preparation times Xm of the rest of bottom (100 - $\alpha$) percent based on X distribution information of the write preparation times Xm.

Meanwhile, this threshold Xth takes a value which is equal to or more than a maximum value of the write preparation times Xm of top $\alpha$ (for example, $\alpha$ = 95) percent in case that the write preparation times Xm are arranged in the ascending order, and which is less than a minimum value of the write preparation times Xm of bottom (100 - $\alpha$) percent. In addition, the value of $\alpha$ is determined in advance according to a user operation.

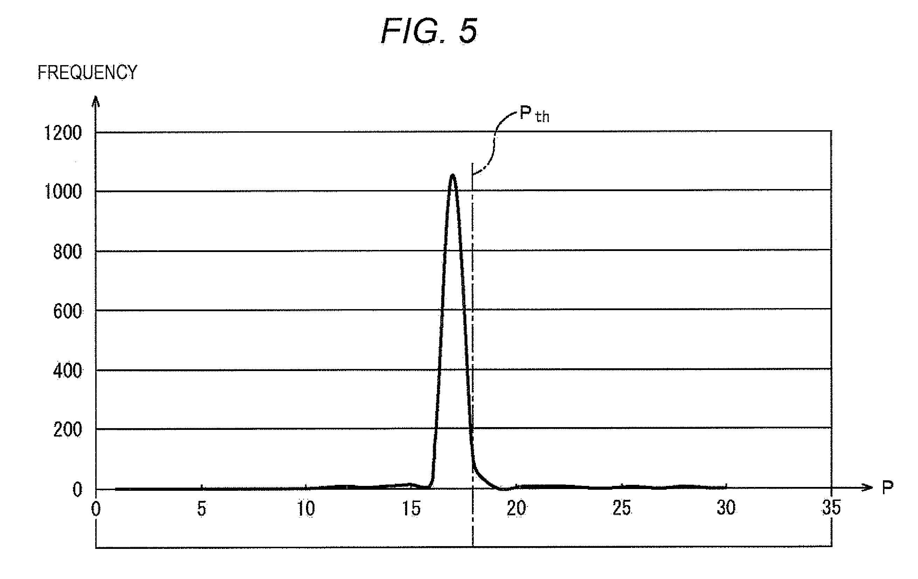

Next, Fig. 5 illustrates an example of a distribution of buffer write times Pm stored in the write information storage unit 69.

In Fig. 5, a horizontal axis indicates the buffer write time Pm, and a vertical axis indicates the frequency of the buffer write time Pm.

The threshold calculation unit 70 generates P distribution information indicating the distribution of the buffer write times Pm as illustrated in Fig. 5 based on a plurality of buffer write times Pm stored in the write information storage unit 69.

Further, the threshold calculation unit 70 calculates a threshold Pth for distinguishing between the buffer write times Pm of top $\alpha$ percent in case that the buffer write times Pm are arranged in an ascending order and the buffer write times Pm of the rest of bottom (100 - $\alpha$) percent based on P distribution information of the buffer write times Pm.

Meanwhile, this threshold Pth takes a value which is equal to or more than a maximum value of the buffer write times Pm of top $\alpha$ percent in case that the buffer write times Pm are arranged in the ascending order, and which is less than a minimum value of the buffer write times Pm of bottom (100 - $\alpha$) percent.

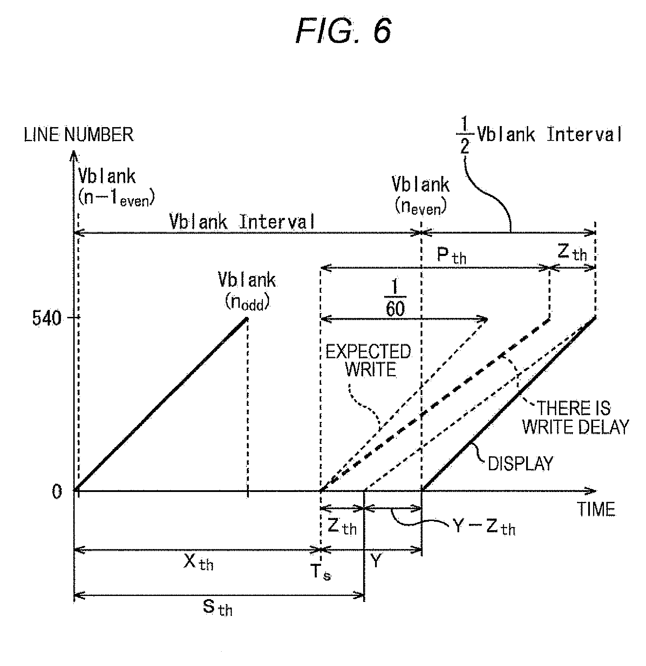

Next, Fig. 6 illustrates an example where the threshold calculation unit 70 calculates the threshold time Sth and the delay buffer maximum time (Y-Zth) based on the calculated threshold Xth and threshold Pth.

As illustrated in Fig. 6, the threshold calculation unit 70 calculates the threshold Zth according to equation 1 based on the threshold Xth, the threshold Pth and the predetermined display interval Vblank Interval.

$$Zth = (3/2) \times Vblank\ Interval - (Xth + Pth) \qquad (1)$$

In addition, in Fig. 6, an expected write time 1/60 is a write time of the field image m which is expected when, for example, writing of data is not delayed in the write control unit 64.

This expected write time 1/60 is determined according to, for example, the time required to display the field image m. In this case, the display unit 67 displays the field image m in the display time 1/60. Hence, for example, the expected write time is also 1/60 likewise. In addition, when the display unit 67 displays the field image m in a display time 1/a, for example, an expected write time is 1/a.

Further, as illustrated in Fig. 6, the threshold calculation unit 70 calculates the threshold time Sth according to following equation (2) based on the threshold Zth and the threshold Xth.

$$Sth = Xth + Zth \qquad (2)$$

Meanwhile, the threshold time Sth refers to a write preparation time at which writing of the field image m performed using the threshold Pth for the write time is finished at a display end time at which the field image m is displayed in synchronization with a display timing at which the field image m needs to be displayed.

More specifically, in Fig. 6, for example, the threshold time Sth refers to a write preparation time at which writing of the even-numbered field image $n_{even}$ performed using the threshold Pth for the write time is finished at a display end time at which the even-numbered field image $n_{even}$ is displayed in synchronization with the display timing Vblank ($n_{even}$).

Further, for example, the threshold calculation unit 70 calculates a required time Y of the field image m based on the threshold Xth and the display interval Vblank Interval.

Meanwhile, the required time Y is statistically a time required from the write start time Ts to a display timing (in case of Fig. 6, the display timing Vblank ($n_{even}$)).

That is, as illustrated in Fig. 6, for example, the threshold calculation unit 70 calculates the required time Y according to following equation (3) based on the display interval Vblank Interval of the display timing Vblank ($n-1_{even}$) and the display timing ($n_{even}$) and the threshold Xth.

$$Y = Vblank\ Interval - Xth \qquad (3)$$

Further, as illustrated in Fig. 6, the threshold calculation unit 70 calculates the delay buffer maximum time (Y-Zth) based on the calculated required time Y and threshold Zth.

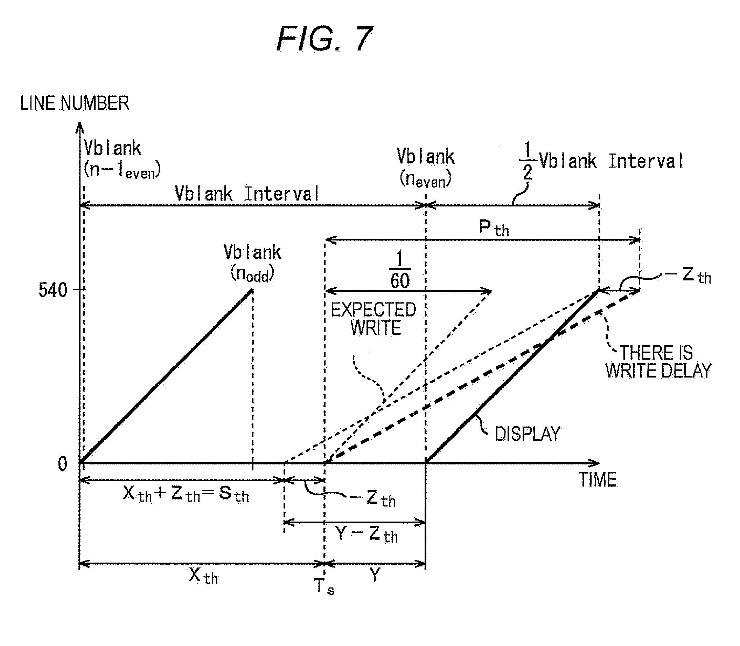

In addition, although a case has been described with reference to Fig. 6 where Zth $\geq$ 0 is true, when Zth < 0 is true as illustrated in Fig. 7, the threshold time Sth and the delay buffer maximum time (Y-Zth) are calculated in the same manner.

The threshold calculation unit 70 supplies the calculated threshold time Sth and delay buffer maximum time (Y-Zth) to the write information measurement unit 68.

The write information measurement unit 68 decides whether or not the write preparation time Xm of the field image m is the threshold time Sth from the threshold calculation unit 70 or more according to following equation (4), and supplies the decision result to the write control unit 64.

$$Xm \geq Sth \qquad (4)$$

The write control unit 64 controls writing of the field image m in the display buffer 65 according to the decision result from the write information measurement unit 68.

[Details of Write Control performed by Write Control Unit 64]

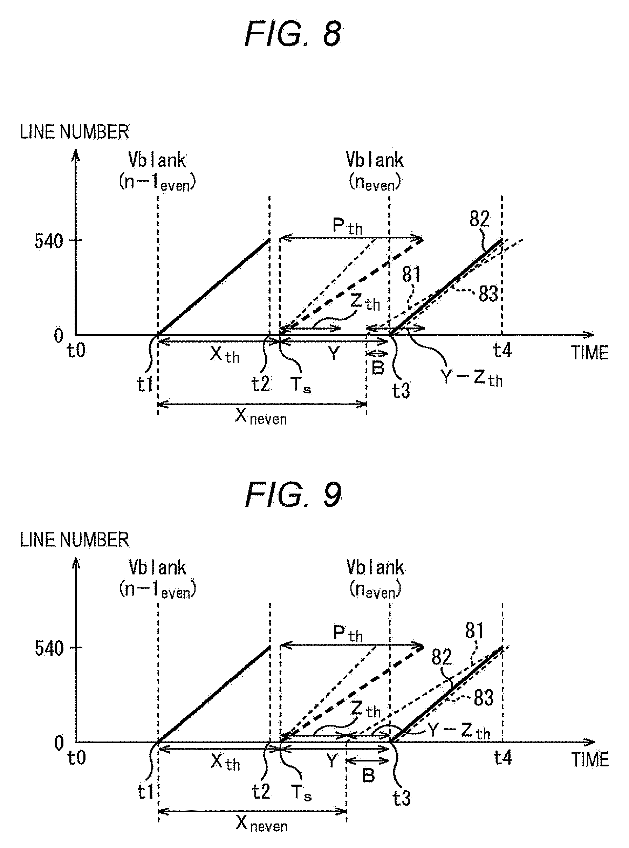

Next, details of processing of controlling writing of the field image m in the write control unit 64 according to a decision result from the write information measurement unit 68 will be described with reference to Figs. 8 to 13.

Cases will be more specifically described with reference to Figs. 8 to 13 where the field image m is the even-numbered field image $n_{even}$, and the write preparation time Xm is the write preparation time $Xn_{even}$. In addition, the same applies to cases where the field image m is the odd-numbered field image $n_{odd}$ and the write preparation period Xm is the write preparation time $Xn_{odd}$, and therefore these cases will not be described.

Fig. 8 illustrates an example where the write control unit 64 controls writing when equation (4) is satisfied.

In addition, in Fig. 8, a line segment 81 represents a write time required to start writing the even-numbered field image $n_{even}$ in the display buffer 65 after the write preparation time $Xn_{even}$ passes.

Meanwhile, although the write time represented by the line segment 81 actually changes according to, for example, a time required for transfer or a time required for decoding, the write time is statistically found based on the write preparation time Xm and an allowable delay time Pm. That is, for example, the write time 81 indicates an upper limit of the write time of the field image m received at the probability of the $\alpha$ percent.

Further, in Fig. 8, a line segment 82 represents a display time required to display the even-numbered field image $n_{even}$ in synchronization with the display timing Vblank ($n_{even}$) at which the even-numbered field image $n_{even}$ needs to be displayed.

Furthermore, in Fig. 8, a line segment 83 represents a write time required to start writing the even-numbered field image $n_{even}$ by providing delay of a delay time B from a time when the write preparation time $Xn_{even}$ passes.

Meanwhile, the write time represented by the line segment 83 is an expected write time 1/60. This is because, in the write time represented by the line segment 83, the even-number field image $n_{even}$ written in the display buffer 65 is not transferred from the transmission apparatus 21, and decoded and written in the display buffer 65, but is the even-numbered field image $n_{even}$ held in the delay buffer 64a.

In Fig. 8, $Xn_{even} \geq Xth + Zth$ (= Sth) is true, and equation (4) is satisfied. A case will be described where, after the write preparation time $Xn_{even}$ passes, writing of the even-numbered field image $n_{even}$ in the display buffer 65 is started.

In this case, the line segment 81 and the line segment 82 intersect as illustrated in Fig. 8, for example, lines (i$\geq$L) subsequent to a line number L among of lines (i) of a line number i in the even-numbered field image $n_{even}$ is written in the display buffer 65 at or after the display time of the lines (i$\geq$L).

In addition, the line (i=L) is a line written in the display buffer 65 when the line segment 81 and the line segment 82 intersect.

Hence, in Fig. 8, the lines (i$\geq$L) subsequent to, for example, the line number L cannot be displayed at a display time represented by the line segment 82.

Consequently, when obtaining the decision result that equation (4) is satisfied from the write information measurement unit 68, the write control unit 64 causes the built-in delay buffer 64a to hold the even-numbered field image $n_{even}$ from the decoding unit 63 until the display timing Vblank ($n_{even}$) passes.

Further, the write control unit 64 starts writing the even-numbered field image $n_{even}$ held in the delay buffer 64a, in the display buffer 65 after the display timing Vblank ($n_{even}$) passes.

That is, as illustrated in Fig. 8, for example, the write control unit 64 starts writing the even-numbered field image $n_{even}$ by providing delay of a delay buffer time B from a time when the write preparation time $Xn_{even}$ passes.

In addition, the write control unit 64 delays start of writing by the delay time B by, for example, using the built-in delay buffer 64a. Further, as illustrated in Fig. 9, a delay buffer maximum time Bmax which is a maximum time of the delay buffer time B is a delay buffer time B in case that $Xn_{even}$ = Xth + Zth (= Sth) is true, and is (Y-Zth).

This delay buffer maximum time Bmax (= Y - Zth) is calculated by the threshold calculation unit 70, and is supplied to the write control unit 64 through the write information measurement unit 68.

Consequently, the write control unit 64 can calculate a maximum buffer capacity which is required to delay writing and a remaining buffer capacity which is not required to delay writing, based on the delay buffer maximum time Bmax to be supplied.

Hence, the write control unit 64 can secure the maximum buffer capacity which is required to delay start of writing, and use the remaining buffer capacity for another processing.

Further, when, for example, an odd-numbered field image $n+1_{odd}$ is not displayed at a next display timing Vblank ($n+1_{odd}$), the even-numbered field image $n_{even}$ written at the write time indicated by the line segment 83 is displayed at the display timing Vblank ($n+1_{odd}$).

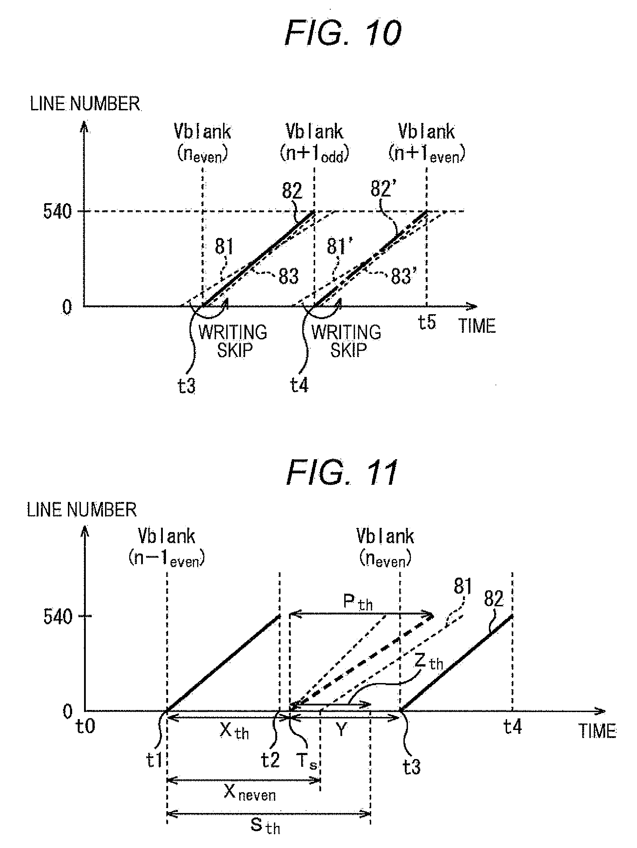

For example, when a line segment 81' representing a write time of the odd-numbered field image $n+1_{odd}$ and a line segment 82' representing a display time of the odd-numbered field image $n+1_{odd}$ intersect in the odd-numbered field image $n+1_{odd}$ as illustrated in Fig. 10, the write control unit 64 writes the odd-numbered field image $n+1_{odd}$ at a write time represented by a line segment 83' by delaying start of writing.

In this case, similar to the case described with reference to Fig. 8, the odd-numbered field image $n+1_{odd}$ is not displayed at the display time indicated by the line segment 82'. Consequently, the even-numbered field image $n_{even}$ which has already been written at the write time represented by the line segment 83 is displayed at the display time represented by the line segment 82'.

In addition, when, for example, the even-numbered field image $n_{even}$ is displayed in synchronization with the display timing Vblank ($n_{even}$), and the odd-numbered field image $n+1_{odd}$ is not displayed at the display timing Vblank ($n+1_{odd}$), it is possible to display the odd-numbered field image $n_{even}$ held in the display buffer 65 at the display timing Vblank ($n+1_{odd}$).

Further, when a field image which needs to be displayed at the display timing Vblank ($n+1_{odd}$) and, in addition, a display timing (for example, the display timing Vblank ($n+1_{even}$)) subsequent to the display timing Vblank ($n+1_{odd}$) is not displayed, the even-numbered field image $n_{even}$ may be displayed at this display timing.

Next, Fig. 11 illustrates an example where the write control unit 64 controls writing when equation (4) is not satisfied.

In Fig. 11, $Xn_{even}$ < Xth + Zth (= Sth) is true and, when equation (4) is not satisfied, the line segment 81 and the line segment 82 do not statistically intersect. In this case, the line (i) of the line number i is written in the display buffer 65 before the display time of the line (i).

Hence, when obtaining the decision result that equation (4) is not satisfied from the write information measurement unit 68, the write control unit 64 starts writing of the even-numbered field image $n_{even}$ in the display buffer 65 when the write preparation time $Xn_{even}$ passes.

Further, the display control unit 66 causes the display unit 67 to display the even-numbered field image $n_{even}$ written in the display buffer 65 in synchronization with the display timing Vblank ($n_{even}$).

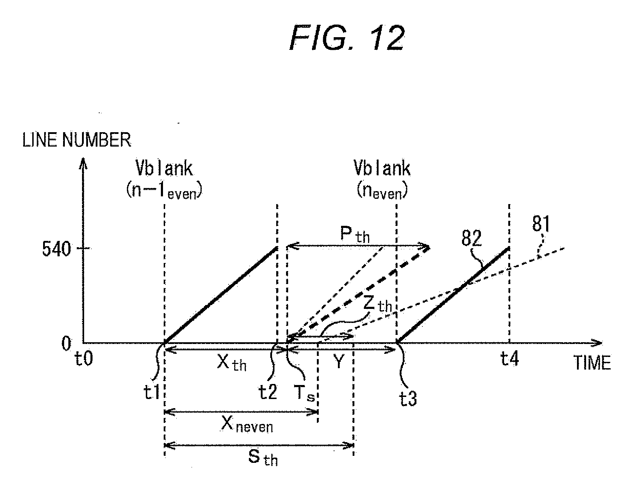

In addition, when equation (4) is satisfied, the line segment 81 and the line segment 82 do not statistically intersect as described above. However, as illustrated in Fig. 12, the line segment 81 and the line segment 82 actually intersect in some cases.

In this case, for example, lines (i≥L) subsequent to the line number L among the lines (i) of the line number i is written in the display buffer 65 at or after the display time of the lines (i>L).

Hence, in a case illustrated in Fig. 12, for example, the lines (i≥L) subsequent to the line number L cannot be displayed at a display time at which the lines (i≥L) need to be displayed.

Hence, when equation (4) is not satisfied, whether or not a write time of the line (i) comes at or after the display time of the line (i) is desirably monitored.

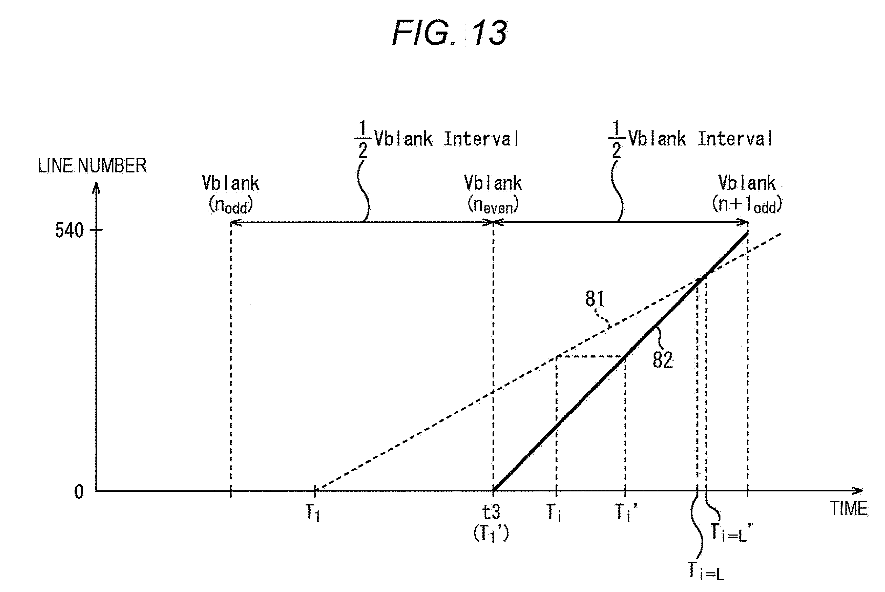

Next, Fig. 13 illustrates an example of a method of monitoring in the write information measurement unit 68 whether or not the write time of the line (i) comes at or after the display time of the line (i) when equation (4) is not satisfied.

To prevent the write time of the line (i) from coming at or after the display time of the line (i), a write time Ti of the line (i) needs to come earlier than a display time Ti' of the line (i) as shown in following equation (5).

$$Ti < Ti' \qquad (5)$$

In addition, the display time Ti' can be represented by following equation (6).

$$Ti' = i \times Vblank\ Interval/(2 \times I) \quad (6)$$

Meanwhile, Vblank Interval/2 indicates a display time required to display the entire field image m (the even-numbered field image $n_{even}$ in case of Fig. 13). Further, the total number of lines I indicates the total number of lines of the field image m (I = 540 in case of Fig. 13) . Hence, Vblank Interval/2 x 1/I (= Vblank Interval/(2 x I)) represents the display time required to display one line of the field image m. Therefore, i x Vblank Interval/(2 x I) = Ti' indicates the display time required to display the number of lines i.

In addition, when the write time Ti comes earlier than a time t3 which is the display timing Vblank ($n_{even}$), that is, when Ti < t3 is true as illustrated in Fig. 13, equation (5) is satisfied at all times. Consequently, it is not necessary to decide whether or not equation (5) is satisfied until the start time t3 arrives.

In Fig. 13, the lines (1) to (L) written at write times $T_1$ to $T_{i=L}$ which satisfy equation (5) are displayed on the display unit 67 at display times $T_1'$ to $T_{i=L}'$ in synchronization with the display timing Vblank ($n_{even}$).

Further, display times $T_{i=L+1}'$ to $T_{i=540}'$ have already passed at write times $T_{i=L+1}$ to $T_{i=540}$, and therefore the rest of lines (L+1) to (540) lines written at write times $T_{i=L+1}$ to $T_{i=540}$ which do not satisfy equation (5) are not displayed on the display unit 67 in synchronization with the display timing Vblank ($n_{even}$).

Meanwhile, after the write time $T_{i=540}$ passes, the display buffer 65 holds the 1 to L lines and the lines (L+1) to (540) lines, that is, the entire even-numbered field image $n_{even}$.

Hence, similar to the above case of Fig. 10, when, for example, the odd-numbered field image $n+1_{odd}$ is not displayed at the display timing Vblank ($n+1_{odd}$) next to the display timing Vblank ($n_{even}$), the even-numbered field image $n_{even}$ held in the display buffer 65 is displayed at this display timing Vblank ($n+1_{odd}$).

In addition, write information obtained when writing is performed at the write time indicated by the line segment 83 as illustrated in Fig. 8 is desirably not used to calculate, for example, the threshold time Sth without being stored in the write information storage unit 69.

Meanwhile, the threshold calculation unit 70 updates the threshold time Sth and the delay buffer maximum time (Y-Zth) by appropriately performing the threshold calculation processing. This is because a transmission time changes according to, for example, a congestion situation of the network 23. That is, depending on a change in the transmission time, the write preparation time Xm and the buffer write time Pm used to calculate the threshold time Sth and the delay buffer maximum time (Y-Zth) also change.

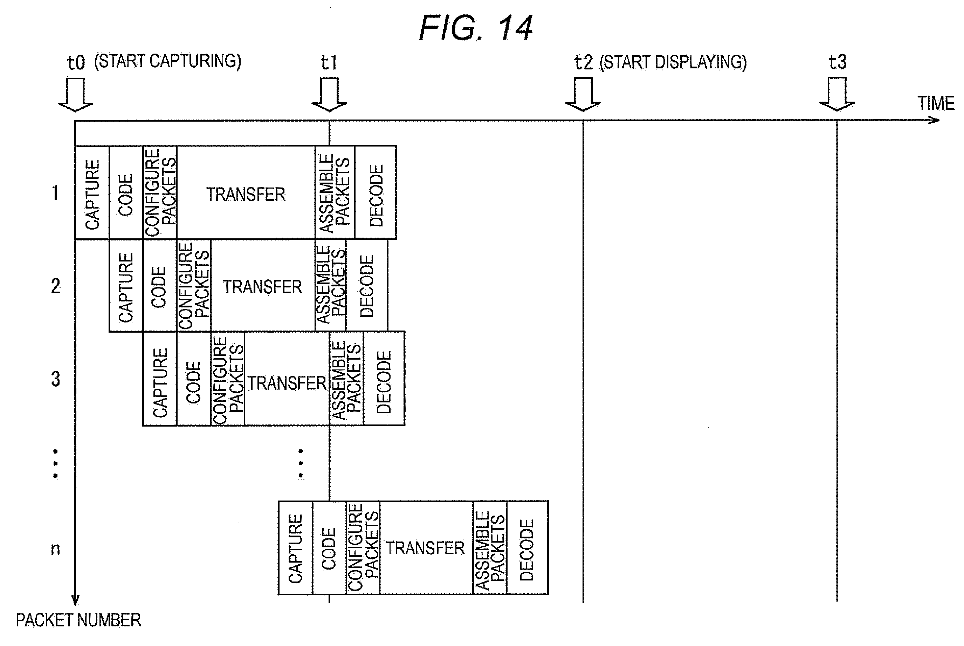

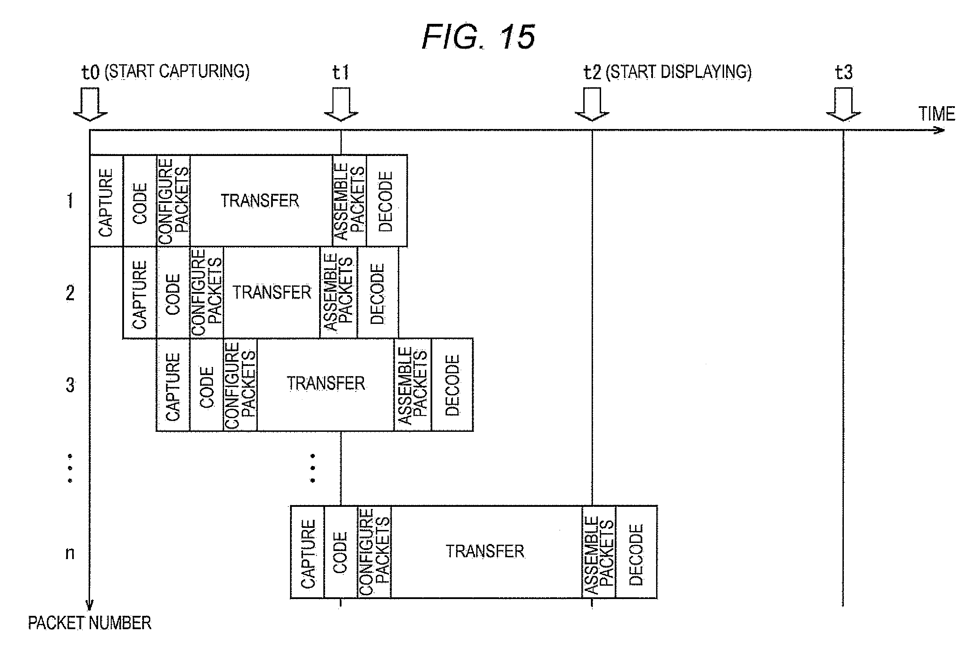

Next, Figs. 14 and 15 illustrate examples of how a transmission time changes according to, for example, a congestion situation of the network 23.

In Figs. 14 and 15, a vertical axis indicates a packet number indicating each RTP packet of the image data n. Further, a horizontal axis indicates times required for "capture processing" performed by the capture unit 41, "coding" processing performed by the coding unit 42, "packet configuration" processing performed by the packet configuration unit 43, "transfer" processing of RTP packets performed between the RTP transmission unit 44 and the RTP reception unit 61 through the network 23, "packet assembly" processing performed by the packet assemble unit 62 and "decoding" processing performed by the decoding unit 63 with respect to data configuring the image data n.

As illustrated in Figs. 14 and 15, the time required for the "transfer" processing becomes significantly different depending on a situation of the network 23. That is, when congestion of the network 23 is relatively a little, the time required for the "transfer" processing" is short as illustrated in Fig. 14, and, when congestion of the network 23 is relatively significant, the time required for the "transfer" processing is long as illustrated in Fig. 15.

Hence, when the time required for the "transfer" processing and, moreover, the transmission time change depending on, for example, the congestion situation of the network 23, the write preparation time Xm and the buffer write time Pm also change, and therefore the threshold calculation unit 70 needs to appropriately perform threshold calculation processing.

[Explanation of Operation of Reception Apparatus 22]

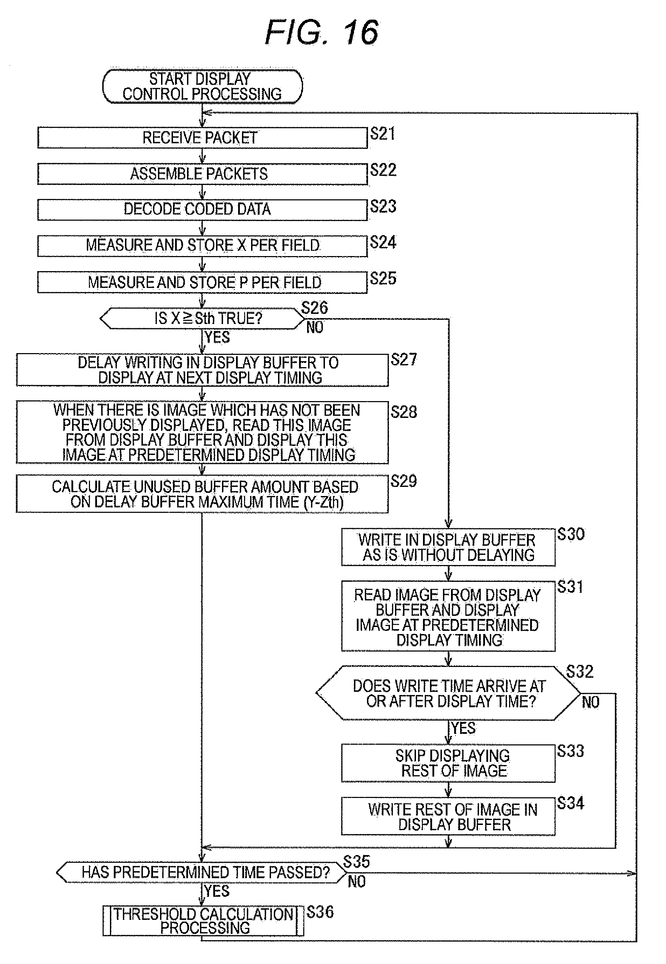

Next, display control processing performed by the reception apparatus 22 will be described with reference to the flowchart in Fig. 16.

In step S21, the RTP reception unit 61 receives RTP packets transmitted from the RTP transmission unit 44 through the network 23, and supplies the RTP packets to the packet assemble unit 62.

In step S22, the packet assemble unit 62 generates decoding target coded data by assembling the RTP packets from the RTP reception unit 61, and supplies the coded data to the decoding unit 63.

In step S23, the decoding unit 63 applies decoding processing supporting coding processing performed in the coding unit 42, to the coded data from the packet assemble unit 62, and supplies the resulting image data to the write control unit 64. Meanwhile, for decoding processing, decoding processing of decoding and stretching data by, for example, inverse transform of wavelet transform is adopted.

The write control unit 64 supplies a write start time Ts at which writing in the display buffer 65 is started and a write end time Te at which writing is finished, to the write information measurement unit 68 per field image m configuring the image data from the decoding unit 63. Meanwhile, the field image m is one of an odd-numbered field image and an even-numbered field image, and is an image which is displayed m-th.

In addition, the write control unit 64 supplies the field image m configuring the image data from the decoding unit 63 to the display buffer 65 to store (write in) in step S27, S30 or S34 described below.

In step S24, the write information measurement unit 68 measures the write preparation time Xm of the field image m based on the write start time Ts from the write control unit 64 and the predetermined display timing Vblank, and supplies the write preparation time Xm to the write information storage unit 69 to store.

In step S25, the write information measurement unit 68 measures the buffer write time Pm of the field image m based on the disclosure time Ts and the end time Te from the write control unit 64, and supplies the buffer write time Pm to the write information storage unit 69 to store.

In step S26, the write information measurement unit 68 decides whether or not the write preparation time Xm measured by processing in step S24 is the threshold time Sth or more calculated by processing in step S36 immediately before according to equation (4). In addition, when the processing in step S36 is not yet performed, for example, the threshold time Sth takes a predetermined value.

In step S26, when deciding that the write preparation time Xm is the threshold time Sth or more, the write information measurement unit 68 supplies the decision result to the write control unit 64, and processing proceeds to step S27.

Further, in step S27, when obtaining the decision result that the write preparation time Xm is the threshold time Sth or more from the write information measurement unit 68, the write control unit 64 delays start of writing of the field image m in the display buffer 65 by using the built-in delay buffer 64a.

More specifically, when, for example, the field image m is the even-numbered image $n_{even}$, the write control unit 64 delays start of writing of the even-numbered field image $n_{even}$ in the display buffer 65 subsequent to the display timing Vblank ($n_{even}$) as described with reference Fig. 8.

In step S28, if a field image m-1 has already been written in the display buffer 65 in previous step S27 or step S34 described below, the display control unit 66 reads the field image m-1 from the display buffer 65 and displays the field image m-1 instead of the field image m.

More specifically, when, for example, the field image m is the even-numbered field image $n_{even}$ and the field image m-1 is the odd-numbered field image $n_{odd}$, the display control unit 66 causes the display unit 67 to display the odd-numbered field image $n_{odd}$ which has already been written in the display buffer 65 in synchronization with the display timing Vblank ($n_{even}$).

In step S29, the write control unit 64 calculates a buffer capacity which is not used in the delay buffer 64a based on the delay buffer maximum time (Y-Zth) which has been calculated in step S36 immediately before.

Further, the write control unit 64 uses for another processing the buffer capacity which is not used in the delay buffer 64a. By this means, it is possible to efficiently use the buffer capacity which is not used in the delay buffer 64a.

Meanwhile, in step S26, when deciding that the write preparation time Xm is not (is less than) the threshold time Sth or more, the write information measurement unit 68 supplies the decision result to the write control unit 64 and processing proceeds to step S30.

In step S30, when obtaining the decision result that the write preparation time Xm is less than the threshold time Sth from the write information measurement unit 68, the write control unit 64 starts writing the field image m in the display buffer 65 when the write preparation time Xm passes.

Further, in step S31, the display control unit 66 makes the field image m written in the display buffer 65 be displayed.

More specifically, for example, when the field image m is the even-numbered field image $n_{even}$, the display control unit 66 causes the even-numbered field image $n_{even}$, written in the display buffer 65, to be displayed in synchronization with the display timing Vblank ($n_{even}$).

In step S32, in parallel to processing in step S30 and step S31, the write information measurement unit 68 decides whether or not the write time of each line (i) of the field image m arrives at or after the display time of the line (i), based on whether or not equation (5) is satisfied.

In step S32, when the write information measurement unit 68 does not decide that the write time of each line (i) of the field image m arrives at or after the display time of the line (i) until the processing in step S30 and step S31 are finished, processing proceeds to step S35.

Further, in step S32, when the write information measurement unit 68 does not decide that the write time of each line (i) of the field image m arrives at or after the display time of the line (i) until the processing in step S30 and step S31 are finished, processing proceeds to step S33.

In step S33, the display control unit 66 skips displaying the rest of portions of the field image m which is written in the display buffer 65 at the write time which does not satisfy equation (5), and processing proceeds to step S34.

In addition, part of the field image m which is written at the write time which satisfies equation (5) is displayed by processing in step S31.

In step S34, the display control unit 66 causes the write control unit 64 to write the rest of portions of the field image m in the display buffer 65 at the write time which does not satisfy equation (5). By this means, part and the rest of the field image m, that is, the entire field image m, is written in the display buffer 65.

In step S35, the threshold calculation unit 70 decides whether or not a clock time clocked by a built-in clock unit (not illustrated) passes a predetermined time, and, when deciding that the clock time does not pass the predetermined time, returns processing to step S21, and the same processing is performed subsequently.

Further, in step S35, when it is decided that the clock time passes the predetermined time, processing proceeds to step S36, and the threshold calculation unit 70 performs threshold calculation processing of calculating the threshold time Sth and the delay buffer maximum time (Y-Zth) based on the write preparation time Xm and the buffer write time Pm stored in the write information storage unit 69. Furthermore, the threshold calculation unit 70 supplies the calculated threshold time Sth and delay buffer maximum time (Y-Zth) to the write information measurement unit 68.

In step S36, the threshold calculation unit 70 performs the threshold calculation processing, and then deletes the write preparation time Xm and the buffer write time Pm stored in the write information storage unit 69. Further, the threshold calculation unit 70 resets clocking of the built-in clock unit, starts clocking again and returns processing to step S21, and the same processing is performed subsequently.

[Details of Threshold Calculation Processing]

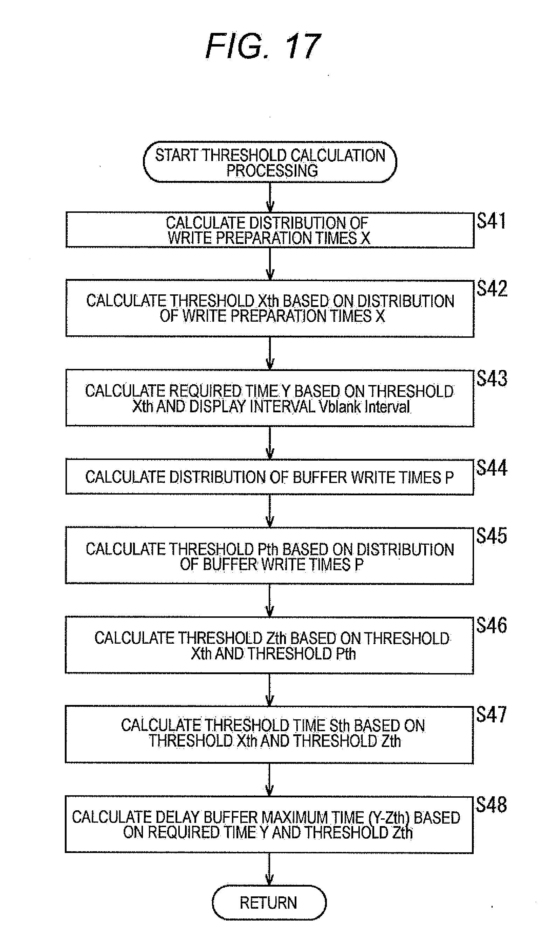

Next, details of the threshold calculation processing in step S36 in Fig. 16 will be described with reference to a flowchart in Fig. 17.

In step S41, the threshold calculation unit 70 reads the write preparation times Xm from the write information storage unit 69, and calculates X distribution information representing a distribution of the read write preparation times Xm.

In step S42, the threshold calculation unit 70 calculates the threshold Xth based on the X distribution information calculated in step S41.

In step S43, the threshold calculation unit 70 calculates the required time Y according to equation (3) based on the display interval Vblank Interval and the threshold Xth.

In step S44, the threshold calculation unit 70 reads the buffer write times Pm from the write information storage unit 69, and calculates P distribution information representing a distribution of the read buffer write times Pm.

In step S45, the threshold calculation unit 70 calculates the threshold Pth based on the P distribution information calculated in step S44.

In step S46, the threshold calculation unit 70 calculates the threshold Zth according to equation (1) based on the threshold Xth calculated in step S42, the threshold Pth calculated in step S45 and the display interval Vblank Interval.

In step S47, the threshold calculation unit 70 calculates the threshold time Sth according to equation (2) based on the threshold Xth calculated in step S42 and the threshold Zth calculated in step S46.

In step S48, the threshold calculation unit 70 calculates a delay buffer maximum time (Y-Zth) based on the required time Y calculated in step S43 and the threshold Zth calculated in step S46.

Thus, the threshold calculation processing is finished, and then the processing is returned to step S36 in Fig. 16. Further, processing returns from step S36 to step S21, and the same processing is performed subsequently.

As described above, according to the display control processing, when; for example, the write preparation time $Xm = Xn_{even}$ of the even-numbered field image $n_{even}$ satisfied equation (4) ($Xm \geq Sth$), start of writing of the even-numbered field image $n_{even}$ is delayed until the display timing Vblank ($n_{even}$) passes.

Further, at the display timing Vblank ($n_{even}$), a field image (for example, the odd-numbered field image $n_{odd}$) which needs to be displayed prior to the even-numbered field image $n_{even}$ is displayed instead of the even-numbered field image $n_{even}$.

Furthermore, according to the display control processing, when, for example, the write preparation time $Xm = Xn_{even}$ of the even-numbered field image $n_{even}$ does not satisfy equation (4) ($Xm \geq Sth$), the even-numbered field image $n_{even}$ is written at the write time represented by the line segment 81 which does not statistically intersect the line segment 82.

Still further, when equation (4) is not satisfied, whether or not the line segment 81 intersects the line segment 82 is monitored according to whether or not equation (5) is satisfied.

Moreover, when it is decided that the line segment 81 intersects the line segment 82, part of the even-numbered field image $n_{even}$ which has already been written is displayed at the display timing Vblank ($n_{even}$). Moreover, by writing the rest of portions of the even-numbered field image in the display buffer 65, the even-numbered field image $n_{even}$ held

in the display buffer 65 can be displayed at a subsequent display timing when necessary.

Consequently, according to the above display control processing, part of an image is skipped, so that it is possible to prevent an accident that, for example, distortion of an image occurs.

<2. Modified Example>

With the present embodiment, for example, a threshold time Sth and a delay buffer maximum time (Y-Zth) are calculated based on write information of a field image m.

However, when, for example, a display unit 67 displays an image according to the progressive system, as illustrated in Fig. 18, image data n is regarded as a progressive image m as is, and, for example, the threshold time Sth and the delay buffer maximum time (Y-Zth) are calculated based on write information of the progressive image m.

In addition, with the progressive image m, Ti' in equation (5) is represented by following equation (6').

$$Ti' = i \times Vblank\ Interval/I \qquad (6)$$

Meanwhile, Vblank Interval represents a display time required to display the entire progressive image m. Further, the total number of lines I represents the total number of lines of the progressive image m. Hence, Vblank Interval x 1/I (= Vblank Interval/I) represents the display time required to display one line of the progressive image m. Hence, i x Vblank Interval/I = Ti' represents the time required to display the number of lines i in the progressive image m.

Further, when generating X distribution information representing a distribution of write preparation times Xm illustrated in Fig. 4, a threshold calculation unit 70 generates the X distribution information assuming the frequency of the write preparation time Xm as 1 irrespectively of a period in which the write preparation times Xm are measured.

However, when the period of measurement is more nearer, the threshold calculation unit 70 may generate the X distribution information such that a more frequency is added to the write preparation time Xm. This is because, when the write preparation time Xm which is measured more nearer more accurately represents the write preparation time of the image to be received.

The same also applies upon generation of P distribution representing a distribution of buffer write times Pm as illustrated in Fig. 5.

By this means, the threshold calculation unit 70 can generate the X distribution information which more accurately reflects a write preparation time of an image to be received, and can generate the P distribution information which more accurately reflects a buffer write time of an image to be received.

Consequently, the threshold calculation unit 70 can calculate, for example, the more adequate threshold time Sth and delay buffer maximum time (Y-Zth) from the X distribution information and the P distribution information. Consequently, it is possible to prevent an accident that, for example, distortion of an image occurs when part of the image is skipped.

In addition, the present technology can employ the following configuration.

(1) The display control apparatus includes: a measurement unit which measures a write preparation time required to start writing a received image in a hold unit which temporarily holds the image; a write control unit which controls the writing of the image according to whether or not the write preparation time is a threshold time or more which represents a write preparation time at which the writing of the image is finished at a display end time at which the image is displayed in synchronization with a display timing at which the image needs to be displayed; and a display control unit which displays the image written in the hold unit under control of the write control unit in synchronization with the display timing by a write time at which the image is displayable in synchronization with the display timing.

(2) In the display control apparatus according to above (1), when the write preparation time is the threshold time or more, the write control unit starts the writing of the image after the display timing passes by delaying the writing of the image started when the write preparation time passes.

(3) The display control apparatus according to above (2) further includes a calculation unit which calculates a maximum value of a buffer capacity used to delay the writing of the image in the write control unit.

(4) In the display control apparatus according to above (2) or (3), when writing of a first image which needs to be displayed at a first display timing is started after the first display timing passes, the display control unit displays a second image which has been written in the hold unit under control of the write control unit and which is different from the first image, in synchronization with the first display timing.

(5) In the display control apparatus according to above (4), when the writing of the first image is started after the first display timing passes, the display control unit displays the second image, writing of which is started after a second display timing which comes earlier than the first display timing passes, in synchronization with the first display timing.

(6) In the display control apparatus according to above (2) or (3), when the write preparation time is less than the threshold time, the write control unit starts writing the image after the write preparation time passes.

(7) In the display control apparatus according to above (6), when the writing of the first image which needs to be displayed at a first display timing is started after the writing preparation time passes, the display control unit finishes writing part of the first image by a write time at which the first image is displayable in synchronization with the first display timing, and, when writing of the rest of the first image is not finished, displays the part of the first image written in the hold unit, in synchronization with the first display timing.

(8) In the display control apparatus according to above (7), when writing of a second image which needs to be displayed at a second display timing which comes after the first display timing is started after the second display timing passes, the display control unit displays the part of the first image and, in addition, the first image the rest of which has been written, in synchronization with the second display timing.

(9) The display control apparatus according to above (1) to (8) further includes: another measurement unit which measures a write time required to write the image; and a threshold calculation unit which calculates the threshold time based on a distribution of the write preparation time and a distribution of the write time, and the write control unit controls the writing of the image according to whether or not the write preparation time is the calculated threshold time or more.

By the way, the above series of processing can be executed by hardware and can be executed by software. When a series of processing are executed by software, a program configuring this software is installed from a program recording medium to, for example, a computer implemented in dedicated hardware or a general-purpose computer which can execute various functions by installing various programs.

[Configuration Example of Computer]

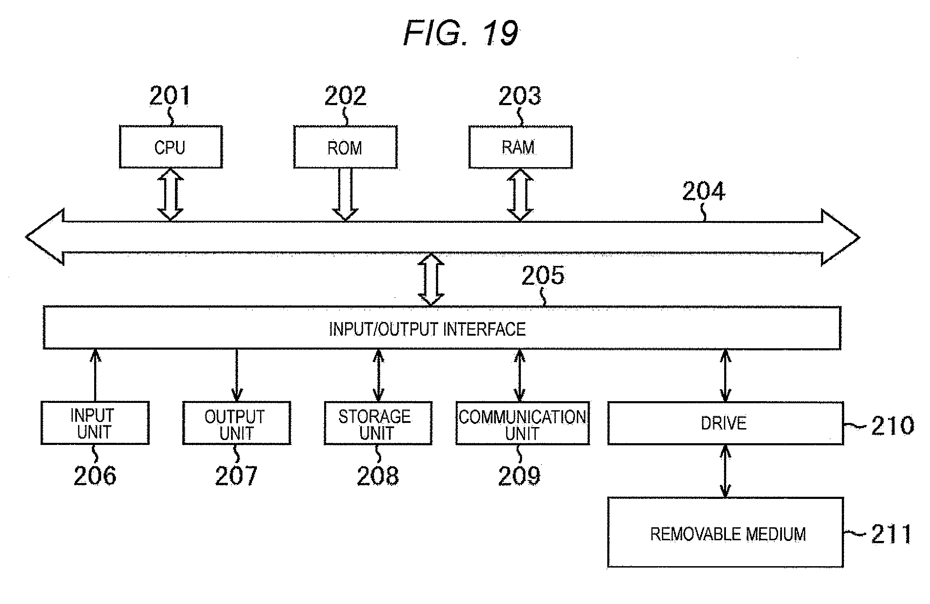

Fig. 19 is a block diagram illustrating a configuration example of hardware of a computer which executes the above series of processing by a program.

A CPU (Central Processing Unit) 201 executes various processing according to a program stored in a ROM (Read Only Memory) 202 or a storage unit 208. In a RAM (Random Access Memory) 203, for example, programs executed by the CPU 201 and data are appropriately stored. These CPU 201, ROM 202 and RAM 203 are mutually connected through a bus 204.

The CPU 201 is also connected with an input/output interface 205 through the bus 204. The input/output interface 205 is connected with an input unit 206 which includes, for example, a keyboard, a mouse and a microphone, and an output unit 207 which includes, for example, a display and a speaker. The CPU 201 executes various processing in response to an instruction input from the input unit 206. Further, the CPU 201 outputs a processing result to the output unit 207.

The storage unit 208 connected to the input/output interface 205 includes, for example, a hard disk, and stores programs executed by the CPU 201 and various items of data. The communication unit 209 communicates with an external apparatus through a network such as Internet or a local area network.

Further, programs may be acquired through the communication unit 209, and stored in the storage unit 208.

When mounted with a removable medium 211 such as a magnetic disk, an optical disk, a magnetooptical disk or a semiconductor memory, a drive 210 connected to the input/output interface 205 drives the removable medium 211 and acquires, for example, a program or data recorded therein. The acquired program or data is transferred to and stored in the storage unit 208 when necessary.

As illustrated in Fig. 19, a recording medium which records (stores) a program which is installed in a computer and can be executed by the computer includes the removable medium 211 which is a package medium including, for example, a magnetic disk (including a flexible disk), an optical disk (CD-ROM (Compact Disc-Read Only Memory) or a DVD (Digital Versatile Disc)), a magnetooptical disk (including MD (Mini-Disc)) or a semiconductor memory, or a hard disk which configures the ROM 202 which temporarily or permanently stores the program or the storage unit 208. A program is recorded in a recording medium by utilizing a wired or wireless communication medium such as a local area network, Internet or digital satellite broadcasting through the communication unit 209 which is an interface such as a router or a modem when necessary.

In addition, the steps for describing the above series of processing in this description naturally include processing performed in a time series along the disclosed order and also include processing executed in parallel or individually if not necessarily executed in a time series.

Further, the embodiment of the present disclosure is by no means limited to the above embodiment, and can be variously changed within a scope which does not deviate from the spirit of the present disclosure.

REFERENCE SIGNS LIST

| | |
|---|---|
| 22 | Reception apparatus |
| 61 | RTP reception unit |
| 62 | Packet assemble unit |
| 63 | Decoding unit |
| 64 | Write control unit |
| 64a | Delay buffer |
| 65 | Display buffer |
| 66 | Display control unit |
| 67 | Display unit |
| 68 | Write information measurement unit |
| 69 | Write information storage unit |
| 70 | Threshold calculation unit |
| 71 | Operation unit |
| 72 | Control unit |

**Claims**

1.  A display control apparatus comprising:

    a measurement unit which measures a write preparation time required to start writing a received image in a hold unit which temporarily holds the image;
    a write control unit which controls the writing of the image according to whether or not the write preparation time is a threshold time or more which represents a write preparation time at which the writing of the image is finished at a display end time at which the image is displayed in synchronization with a display timing at which the image needs to be displayed; and
    a display control unit which displays the image written in the hold unit under control of the write control unit in synchronization with the display timing by a write time at which the image is displayable in synchronization with the display timing.

2.  The display control apparatus according to claim 1, wherein, when the write preparation time is the threshold time or more, the write control unit starts the writing of the image after the display timing passes by delaying the writing of the image started when the write preparation time passes.

3.  The display control apparatus according to claim 2, further comprising a calculation unit which calculates a maximum value of a buffer capacity used to delay the writing of the image in the write control unit.

4.  The display control apparatus according to claim 2, wherein, when writing of a first image which needs to be displayed at a first display timing is started after the first display timing passes, the display control unit displays a second image which has been written in the hold unit under control of the write control unit and which is different from the first image, in synchronization with the first display timing.

5.  The display control apparatus according to claim 4, wherein, when the writing of the first image is started after the first display timing passes, the display control unit displays the second image, writing of which is started after a second display timing which comes earlier than the first display timing passes, in synchronization with the first display timing.

6.  The display control apparatus according to claim 2, wherein, when the write preparation time is less than the threshold time, the write control unit starts writing the image after the write preparation time passes.

7.  The display control apparatus according to claim 6, wherein, when the writing of the first image which needs to be displayed at a first display timing is started after the writing preparation time passes, the display control unit finishes writing part of the first image by a write time at which the first image is displayable in synchronization with the first display timing, and, when writing of the rest of the first image is not finished, displays the part of the first image written in the hold unit, in synchronization with the first display timing.

8. The display control apparatus according to claim 7, wherein, when writing of a second image which needs to be displayed at a second display timing which comes after the first display timing is started after the second display timing passes, the display control unit displays the part of the first image and, in addition, the first image the rest of which has been written, in synchronization with the second display timing.

9. The display control apparatus according to claim 1, further comprising:

another measurement unit which measures a write time required to write the image; and
a threshold calculation unit which calculates the threshold time based on a distribution of the write preparation time and a distribution of the write time,
wherein the write control unit controls the writing of the image according to whether or not the write preparation time is the calculated threshold time or more.

10. A display control method to be performed by a display control apparatus which displays a received image, the method comprising:

a measurement step of measuring a write preparation time required to start writing a received image in a hold unit which temporarily holds the image;
a write control step of controlling the writing of the image according to whether or not the write preparation time is a threshold time or more which represents a write preparation time at which the writing of the image is finished at a display end time at which the image is displayed in synchronization with a display timing at which the image needs to be displayed; and
a display control step of displaying the image written in the hold unit under control of the write control unit in synchronization with the display timing by a write time at which the image is displayable in synchronization with the display timing.

11. A program for causing a computer to function as:

a measurement unit which measures a write preparation time required to start writing a received image in a hold unit which temporarily holds the image;
a write control unit which controls the writing of the image according to whether or not the write preparation time is a threshold time or more which represents a write preparation time at which the writing of the image is finished at a display end time at which the image is displayed in synchronization with a display timing at which the image needs to be displayed; and
a display control unit which displays the image written in the hold unit under control of the write control unit in synchronization with the display timing by a write time at which the image is displayable in synchronization with the display timing.

## FIG. 1

EP 2 584 557 A1

# FIG. 2

LINE NUMBER

Vblank (n−1$_{even}$)   Vblank (n$_{odd}$)   Vblank (n$_{even}$)   Vblank (n+1$_{odd}$)   Vblank (n+1$_{even}$)

540

0

TIME

——— OutBuf0 (EVEN-NUMBERED FIELD)

—·—·— OutBuf1 (ODD-NUMBERED FIELD)

# FIG. 3

LINE NUMBER

Vblank (n−1$_{even}$)   Vblank (n$_{odd}$)   Vblank (n$_{even}$)

$P_{neven}$

540

0

$X_{neven}$

$T_s$   $T_e$   TIME

## FIG. 4

FREQUENCY

EP 2 584 557 A1

*FIG. 5*

EP 2 584 557 A1

# FIG. 6

## FIG. 7

EP 2 584 557 A1

EP 2 584 557 A1

# FIG. 8

# FIG. 9

## FIG. 10

## FIG. 11

# FIG. 12

LINE NUMBER

Vblank
$(n-1_{even})$

Vblank
$(n_{even})$

540

$P_{th}$

82    81

$Z_{th}$

0

t0    $X_{th}$    Y    t4    TIME

t1    t2    $T_s$    t3

$X_{neven}$

$S_{th}$

## FIG. 13

## FIG. 14

t0 (START CAPTURING)   t1   t2 (START DISPLAYING)   t3

TIME

PACKET NUMBER

EP 2 584 557 A1

## FIG. 15

EP 2 584 557 A1

# FIG. 16

START DISPLAY
CONTROL PROCESSING

RECEIVE PACKET — S21

ASSEMBLE PACKETS — S22

DECODE CODED DATA — S23

MEASURE AND STORE X PER FIELD — S24

MEASURE AND STORE P PER FIELD — S25

IS $X \geq Sth$ TRUE? — S26
NO
YES

DELAY WRITING IN DISPLAY BUFFER TO
DISPLAY AT NEXT DISPLAY TIMING — S27

WHEN THERE IS IMAGE WHICH HAS NOT BEEN
PREVIOUSLY DISPLAYED, READ THIS IMAGE
FROM DISPLAY BUFFER AND DISPLAY THIS
IMAGE AT PREDETERMINED DISPLAY TIMING — S28

CALCULATE UNUSED BUFFER AMOUNT BASED
ON DELAY BUFFER MAXIMUM TIME (Y-Zth) — S29

WRITE IN DISPLAY BUFFER
AS IS WITHOUT DELAYING — S30

READ IMAGE FROM DISPLAY
BUFFER AND DISPLAY
IMAGE AT PREDETERMINED
DISPLAY TIMING — S31

DOES WRITE TIME ARRIVE AT
OR AFTER DISPLAY TIME? — S32
NO
YES

SKIP DISPLAYING
REST OF IMAGE — S33

WRITE REST OF IMAGE IN
DISPLAY BUFFER — S34

HAS PREDETERMINED TIME PASSED? — S35
NO
YES

THRESHOLD CALCULATION
PROCESSING — S36

# FIG. 17

```
        ┌─────────────────────────────────┐
        │ START THRESHOLD CALCULATION     │
        │         PROCESSING              │
        └─────────────────────────────────┘
                        │
                        ▼
        ┌─────────────────────────────────┐  S41
        │   CALCULATE DISTRIBUTION OF     │
        │   WRITE PREPARATION TIMES X     │
        └─────────────────────────────────┘
                        │
                        ▼
        ┌─────────────────────────────────┐  S42
        │ CALCULATE THRESHOLD Xth BASED   │
        │ ON DISTRIBUTION OF WRITE        │
        │      PREPARATION TIMES X        │
        └─────────────────────────────────┘
                        │
                        ▼
        ┌─────────────────────────────────┐  S43
        │ CALCULATE REQUIRED TIME Y BASED │
        │ ON THRESHOLD Xth AND DISPLAY    │
        │   INTERVAL Vblank Interval      │
        └─────────────────────────────────┘
                        │
                        ▼
        ┌─────────────────────────────────┐  S44
        │ CALCULATE DISTRIBUTION OF       │
        │     BUFFER WRITE TIMES P        │
        └─────────────────────────────────┘
                        │
                        ▼
        ┌─────────────────────────────────┐  S45
        │ CALCULATE THRESHOLD Pth BASED   │
        │ ON DISTRIBUTION OF BUFFER       │
        │        WRITE TIMES P            │
        └─────────────────────────────────┘
                        │
                        ▼
        ┌─────────────────────────────────┐  S46
        │ CALCULATE THRESHOLD Zth BASED   │
        │ ON THRESHOLD Xth AND            │
        │       THRESHOLD Pth             │
        └─────────────────────────────────┘
                        │
                        ▼
        ┌─────────────────────────────────┐  S47
        │ CALCULATE THRESHOLD TIME Sth    │
        │ BASED ON THRESHOLD Xth AND      │
        │       THRESHOLD Zth             │
        └─────────────────────────────────┘
                        │
                        ▼
        ┌─────────────────────────────────┐  S48
        │ CALCULATE DELAY BUFFER MAXIMUM  │
        │ TIME (Y-Zth) BASED ON REQUIRED  │
        │ TIME Y AND THRESHOLD Zth        │
        └─────────────────────────────────┘
                        │
                        ▼
              ┌─────────────────┐
              │     RETURN      │
              └─────────────────┘
```

## FIG. 18

## FIG. 19

EP 2 584 557 A1

## INTERNATIONAL SEARCH REPORT

| | International application No. |
|---|---|
| | PCT/JP2012/063912 |

A. CLASSIFICATION OF SUBJECT MATTER
*G09G5/00*(2006.01)i, *H04N5/66*(2006.01)i

According to International Patent Classification (IPC) or to both national classification and IPC

B. FIELDS SEARCHED

Minimum documentation searched (classification system followed by classification symbols)
G09G3/00-5/42, H04N5/66

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2005-124167 A  (Canon Inc.),<br>12 May 2005 (12.05.2005),<br>paragraphs [0005], [0041] to [0062], [0071] to [0075]; all drawings<br>& US 2005/0105001 A1    & EP 1519358 A2<br>& KR 10-2005-0030605 A   & CN 1627359 A | 1,10-11<br>2,4-8<br>3,9 |
| Y<br>A | JP 2004-94239 A  (Matsushita Electric Industrial Co., Ltd.),<br>25 March 2004 (25.03.2004),<br>paragraphs [0057] to [0073]; fig. 3 to 5<br>& US 2004/0061530 A1    & CN 1484438 A | 2,4-8<br>3,9 |
| Y<br>A | JP 2009-15248 A  (Toshiba Corp.),<br>22 January 2009 (22.01.2009),<br>paragraphs [0032] to [0040]; fig. 24<br>& US 2009/0015591 A1 | 4-5<br>3,9 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>20 August, 2012 (20.08.12) | Date of mailing of the international search report<br>04 September, 2012 (04.09.12) |
|---|---|
| Name and mailing address of the ISA/<br>   Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2012/063912 |

**Box No. II        Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III        Observations where unity of invention is lacking (Continuation of item 3 of first sheet)**

This International Searching Authority found multiple inventions in this international application, as follows:

```
Disclosed in JP 2005-124167 A is a display control apparatus and a method
therefor, wherein writing control is executed on the basis of writing
preparation time.
Therefore, the invention in claims 1 and 10-11 does not appear to be novel
to the invention disclosed in JP 2005-124167 A, and does not have a special
technical feature.
     (Continued to extra sheet)
```

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2012/063912

Continuation of Box No.III of continuation of first sheet(2)

Therefore, this international application includes, in the claims, four inventions indicated in the following.
Invention 1: The invention in claims 1-3 and 10-11
Invention 2: The invention in claims 4-5
Invention 3: The invention in claims 6-8
Invention 4: The invention in claim 9

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007311924 A